# EUROPEAN PATENT SPECIFICATION

(11) **EP 2 633 433 B1**
(45) Date of publication and mention of the grant of the patent: **01.04.2015**
(21) Application number: 11757153.9
(22) Date of filing: 11.08.2011
(51) Int. Cl.: G06F 17/30, H04L 29/08, G05B 19/418, H04L 29/06

(54) **A METHOD AND A SYSTEM FOR MANAGING COMMUNICATIONS IN INDUSTRIAL SUPERVISION AND CONTROL SYSTEMS**
VERFAHREN UND SYSTEM ZUR VERWALTUNG VON KOMMUNIKATIONEN IN INDUSTRIELLEN ÜBERWACHUNGS- UND STEUERUNGSSYSTEMEN
PROCÉDÉ ET SYSTÈME DE GESTION DE COMMUNICATIONS DANS DES SYSTÈMES DE SUPERVISION ET DE COMMANDE INDUSTRIELS

(30) Priority: 29.10.2010 ES 201001395
(43) Date of publication of application: 04.09.2013
(73) Proprietor: Telefónica, S.A., 28013 Madrid (ES)
(72) Inventor: CABELLO MEDINA, Isidro, E-28013 Madrid (ES)
(74) Representative: Carlos Hernando, Borja
(86) International application number: PCT/EP2011/004033
(87) International publication number: WO 2012/055452

(56) References cited:
- Anonymous: "SIP - Open Communications for Smart Grid Devices", Siemens: Position Paper , 1 June 2009 (2009-06-01), pages 1-24, XP002664009, Retrieved from the Internet: URL:http://www.smartgridnews.com/artman/up loads/1/SIP_-_Open_Communications_for_Smar tGrid_Devices.pdf [retrieved on 2011-11-17]
- Frances Cleveland: "IEC TC57: Key Standards and Information Modeling Concepts", Xanthus Consulting International , 27 September 2010 (2010-09-27), XP002664010, Retrieved from the Internet: URL:http://spc201.ashraepcs.org/pdf/009IEC TC57InformationModelsCIM61850.pdf [retrieved on 2011-11-17]
- MOYER D MARPLES S TSANG J KATZ P GURUNG T CHENG A DUTTA TELCORDIA TECHNOLOGIES H SCHULZRINNE COLUMBIA UNIVERSITY ARJUN ROYCHOWDHUR: "Framework Draft for Networked Appliances using the Session Initiation Protocol; draft-moyer-sip-appliances-framework-01.tx t", 5. JCT-VC MEETING; 96. MPEG MEETING; 16-3-2011 - 23-3-2011; GENEVA;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JC TVC-SITE/- 17/03/2011, INTERNET ENGINEERING TASK FORCE, IETF, no. 1, 1 November 2000 (2000-11-01), XP015032765, ISSN: 0000-0004
- TYCHON M LAHERTY B SCHOENING CISCO SYSTEMS E ET AL: "Energy Management (EMAN) Applicability Statement; draft-tychon-eman-applicability-statement- 00.txt", ENERGY MANAGEMENT (EMAN) APPLICABILITY STATEMENT; DRAFT-TYCHON-EMAN-APPLICABILITY-STATEMENT- 00.TXT, INTERNET ENGINEERING TASK FORCE, IETF; STANDARDWORKINGDRAFT, INTERNET SOCIETY (ISOC) 4, 17 October 2010 (2010-10-17), pages 1-15, XP015071751,

## Description

### Field of the art

The present invention generally relates, in a first aspect, to a method for managing communications in industrial supervision and control systems, under IEC TC 57, and particularly to a method comprising providing a SIP mechanism for carrying out said communications.

A second aspect of the invention relates to a system adapted to implement the method of the first aspect.

For a preferred embodiment, the present invention relates to the field supervision and control systems in the technological area related with elements in the electrical Grid and the possibilities of integration with NGN Telco Technologies in such a monitoring and control architecture. Specifically there are some extended elements broadly used in power grid Network for Supervision and Control of the different elements deployed that could benefit with the functionalities offered by Telco NGN architecture. This invention adapts the supervision and control architecture to future evolution of the Electrical Power Grid to a Smart Grid Concept, where not only will be necessary to supervise and control the elements of the electrical Grid but to look at new elements connected as DER (Distributed Energy Resources) and PHEV (Power assisted Human Electrical Vehicles).

### Prior State of the Art

### Supervision Control and Data Acquisition

Supervisory Control and Data Acquisition (SCADA) systems are used to monitor and control a plant or equipment in industries such as telecommunications, water and waste control, energy, oil and gas refining and transportation. These systems encompass the transfer of data between a SCADA central host computer and a number of Remote Terminal Units (RTUs) and/or Programmable Logic Controllers (PLCs), and the central host and the operator terminals. A SCADA system gathers information (such as where a leak on a pipeline has occurred), transfers the information back to a central site, then alerts the home station that a leak has occurred, carrying out necessary analysis and control, such as determining if the leak is critical, and displaying the information in a logical and organized fashion.

A SCADA system performs four functions:
1. Data acquisition.
2. Networked data communication.
3. Data presentation.
4. Control.

These functions are performed by four kinds of SCADA components:
1. Sensors (either digital or analogue) and control relays that directly interface with the managed system.
2. Remote telemetry units (RTUs). These are small computerized units deployed in the field at specific sites and locations. RTUs serve as local collection points for gathering reports from sensors and delivering commands to control relays.
3. SCADA master units. These are larger computer consoles that serve as the central processor for the SCADA system. Master units provide a human interface to the system and automatically regulate the managed system in response to sensor inputs.
4. The communications network that connects the SCADA master unit to the RTUs in the field.

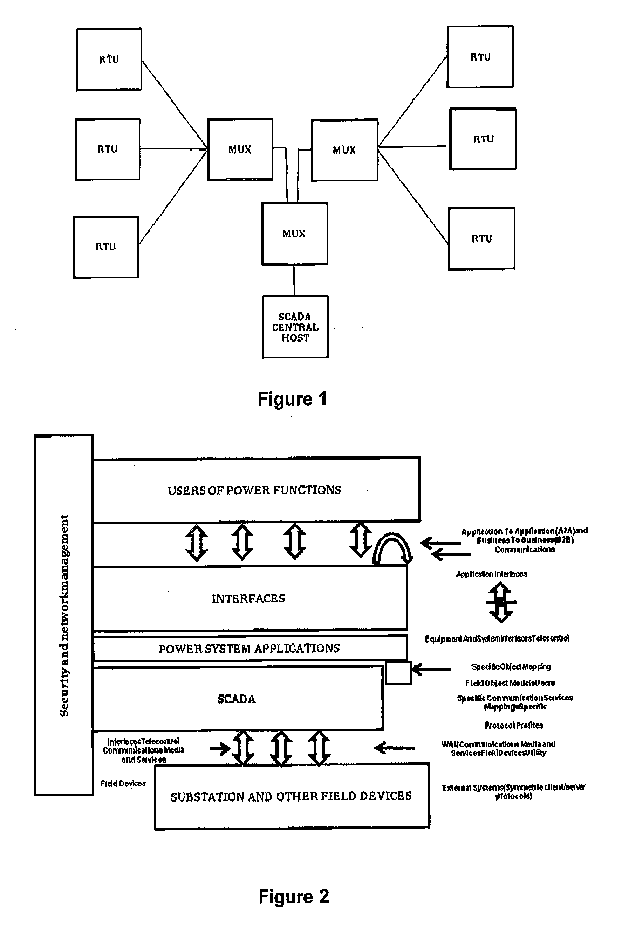

Figure 1 shows a simplified SCADA diagram including a central host connected to several RTUs through a network and respective multiplexers MUX. The sensors indicated above have not been illustrated, but are n communication with the RTUs.

### Reference Protocol Architecture

SCADA is integrated in the reference model followed by TC 57 group of the IEC (International Electrotechnical Commission). Generally the IEC TC 57 develops and maintains International Standards for power system control equipment and systems, including EMS (Energy Management System), SCADA (Supervisory Control and Data Acquisition), distribution automation, teleprotection and associated information exchange for real-time and non-real-time information, used in the planning, operation and maintenance of power systems. IEC 61850 (data models and services for communication) and IEC 61970 (information models for EMS), IEC 61968 (information models for DMS) are the upcoming standards on the global market. Figure1 shows the reference architecture taking into account the current work of the IEC TC 57.

The main issue here is to bring into interoperability the new SCADA concept (generally represented by the IEC 61970/86) and the data transmission protocol IEC 61850. The TC 57 understands the requirements of the future and tries to unify the standards already developed in one system.

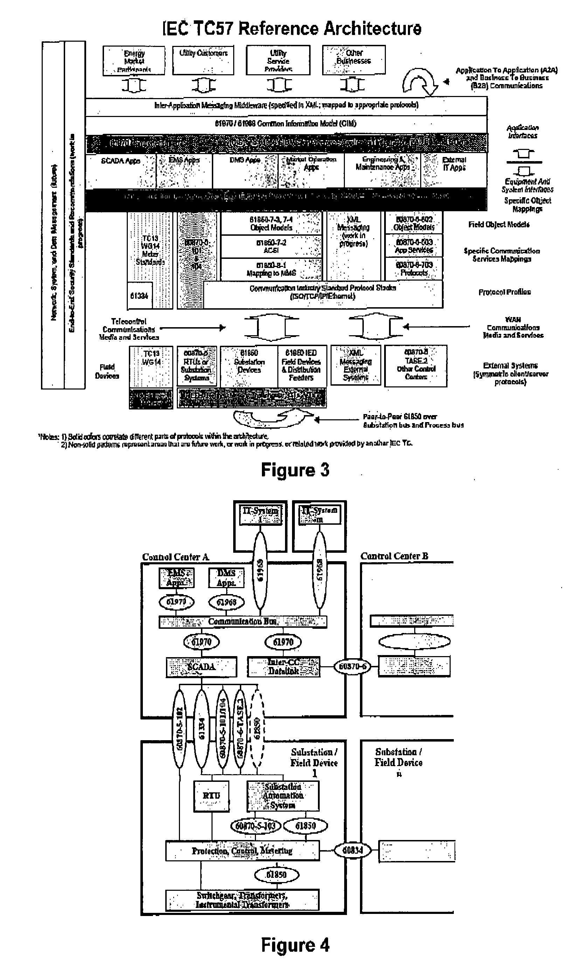

Figure 2 illustrates a simplified TC57 Model for SCADA and Figure 3 a full TC57 Reference Architecture.

Power system management encompasses a broad range of business functions. The standards developed within TC57 for information exchange to support these business functions include the following IEC standards (responsible WGs are shown in parentheses):
- 60870-5: Standards for reliable data acquisition and control on narrow-band serial data links or over TCP/IP networks between SCADA masters and substations.
- 60870-6: Standards for the exchange of real-time operational data between control centers over Wide Area Networks (WANs). This standard is known officially as TASE-2 and unofficially as ICCP.
- 61334: Standards for data communications over distribution line carrier systems.
- 61850: Standards for communications and data acquisition in substations. These standards are known unofficially as the UCA2 protocol standards. They also include standards for hydroelectric power plants communication, monitoring, and control of distributed energy resources and hydroelectric power plants.
- 61970: Standards to facilitate integration of applications within a control center, including the interactions with external operations in distribution as well as other external sources/sinks of information needed for real-time operations. These include the generation and transmission parts of the CIM, the GID interface standards, and XML standards for power system model exchange.
- 61968: Standards for Distribution Management System (DMS) interfaces for information exchange with other IT systems. These include the distribution management parts of the CIM and XML message standards for information exchange between a variety of business systems, such as asset management, work order management, GIS, etc.
- 62325: Standards for deregulated energy market communications.
- 62351: Standards for data and communication security.

Figure 4 shows a TC57 Standard Structure for power systems.

### The protocol IEC 870-5-101 & IEC 870-5-104

IEC 60870-5-101 is an International Communications Protocol Standard for the Telecontrol of Electric Power transmission systems, which is being widely adopted in many countries throughout the world.

The standard specifies the use of permanent directly connected Links between Telecontrol stations. Dedicated base band cables, Power Line Carrier or Radio may be used for Analogue channel communication or direct digital links may be used.

There is now a growing desire to use the 60870 Standard to communicate between Telecontrol stations via Internet services. A new Companion Standard called IEC 60870-5-104 has been published by the IEC for this purpose.

IEC 60870-5-104 (also known as IEC 870-5-104) is an international standard, released in 2000 by the IEC (International Electro-technical Commission). As can be seen from the standard's full designation 'Network access for IEC 60870-5-101 using standard transport profiles', its application layer is based on IEC 60870-5-101.

IEC 60870-5-104 enables communication between control station and substation via a standard TCP/IP network. The TCP protocol is used for connection-oriented secure data transmission.

IEC 60870-5-104 limits the information types and configuration parameters defined in IEC 60870-5-101, which means that not all functions available in IEC 60870-5-101 are supported by IEC 60870-5-104. For instance IEC 60870-5-104 does not support short time stamps (3-byte format), the length of the various address elements is set to defined maximum values. But in practice, vendors very often combine the IEC 60870-5-101 application layer with the IEC 60870-5-104 transport profile, without paying attention to these restrictions. This might then lead to problems, if a device strictly applies the standard. Interoperability between devices by different vendors is ensured by the interoperability list, which is defined by the standard. In the list, the function range is defined for each device by marking the applicable functions. The common denominator between different vendor lists defines the possible function range.

The biggest advantage of IEC 60870-5-104 is that it enables communication via a standard network, which allows simultaneous data transmission between several devices and services. Apart from this, the same pros and cons apply to IEC 60870-5-104 and IEC 60870-5-101. Issues that remain to be dealt with are the definition of communication with redundant systems or networks and, with the use of the internet, data encryption.

Both protocols coexist or not depending of the manufacturer implementation. The relation between the two protocols can be summarized in:
IEC 60870-5-101 protocol operates over serial connections. E-Series RTUs can be configured to support IEC 60870-5-101 protocol as a Slave RTU device. IEC 60870-5-101 can operate on multiple serial ports.
IEC 60870-5-104 protocol operates over IP interfaces. E-Series RTUs support IEC 60870-5-104 over Ethernet interfaces and PPP serial interfaces as a Slave RTU device. IEC 60870-5-104 can operate on multiple IP interfaces.

### The Application Service Data Unit (ASDU) in IEC 870-5-101 & IEC 870-5-104

The IEC 870-5-101 protocol information can be transported in units that are called ASDU and encapsulate the data information that refers to one or more devices specially the RTUs.

The ASDU (Application Service Data Unit) is a message, following a specified format, which originates from the application and is passed to lower levels of the communications stack. Refer to the IEC 60870 protocol.

According to the EPA model (Enhanced Performance Architecture (EPA) followed in 60870 protocols) some APCI (Application Protocol Control Information) is in general added to the ASDU to form the APDU (Application Protocol Data Unit). However the APCI is not needed in the IEC 60870-5-101 protocol, so the APDU is equal to the ASDU.

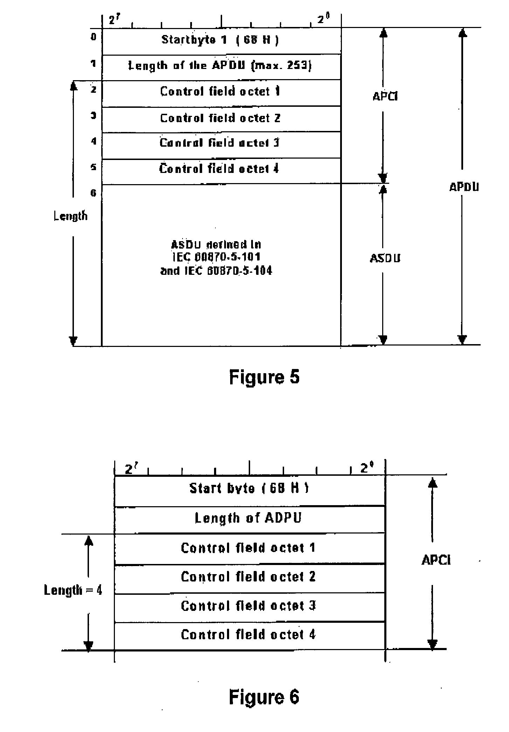

Serial messages, as viewed outside of the stations, have a nested structure which derives from the layered structure of the protocol (see Figure 5).

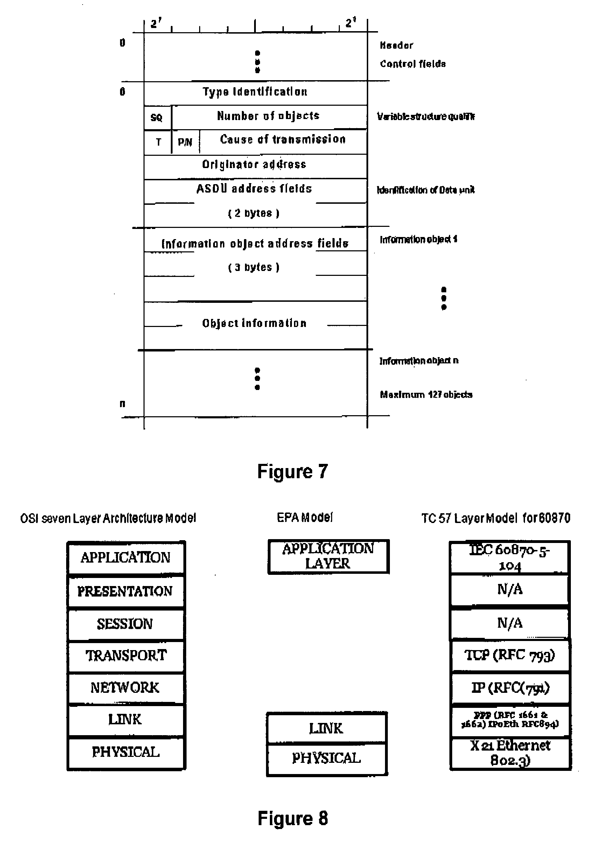

Figure 5 illustrates schematically a general description of the APDU, Figure 6 a general description of the APCI and Figure 7 a detailed description of the APDU.

Regarding Figure 7, the Type identification (TypeID) included therein indicates the type of information that interchanges the Master Unit with the RTU: The TypeID <0> is not used. The range of numbers 1 to 127 is used for standard definitions from IEC 60870-5-101 standard. The range 128 to 135 is reserved for routing of messages. The numbers 136 up to 255 are for special use. The range of numbers 128 up to 255 is private and not defined in the standard, but it is recommended that the data unit identifier fields of private ASDUs have the same format as standard ASDUs.

### IP and Internet based Communications for SCADA

With the advent and growing popularity of wired and wireless IP networking, SCADA systems also migrated to the universal IP highway. The benefits provided by implementing IP based solutions are truly significant; larger and more efficiently utilized bandwidth; standard IP protocols and network applications family; improvement of networking and interoperability.

There are some benefits to using the Internet in SCADA systems: elimination of dedicated line costs (or long distance charges when dial-up lines are used); Internet protocols eliminate the need for a poll/response architecture and thus reduce data traffic and thus improve responsiveness; and Internet protocols enable use of web tools in the development and maintenance of the host software thus reducing the cost and potentially the development schedule.

Another benefit is also realized: freedom from the constraints of a legacy SCADA protocol. In an Internet-based SCADA system, host software inherently handles Internet protocols (e.g. TCP/IP, UDP, HTTP, etc.) and Internet data formats (e.g. HTML, XML, etc.), so any manufacturer's RTU, flow computer or controller that supports Internet protocols may be connected to the system. The benefit of this interoperability is that the system user can select equipment based on appropriate factors such as functionality, price, performance, and quality, without being concerned about the communications protocol and whether or not it is compatible with the existing system.

The ultimate benefit of enabling IP addressing at the device level is that any browser (PC, cell phone, Palm, two-way pager, etc.) may be used from anywhere in the world to obtain data and take control.

Use of Internet protocols is not full of simplicity. Since SCADA systems are designed for reliability, availability and data integrity, extra consideration must be given to confidentiality and authentication.

At the moment there are some manufacturers that implement TCP/IP communication on SCADA systems but most of these systems are isolated from whole internet. Discussions started in many forums to adapt the SCADA systems to the evolution of Energy systems to Smart Grid and in that way the evolution to a SCADA internet based System will be necessary.

### SIP Protocol and TISPAN/NGN for SCADA in Smart Grid scenarios

Nowadays, some initiatives, such as the one described in SIP- Open Communications for Smart Grid Devices [7], are starting to study the evolution of the current hierarchical Energy Grid to a Distributed Generation Grid, with distributed Energy resources, and where the different players, Generators, Transport Operator, Distributor Operators, Prosumers, Markets, etc, could collaborate in a liberalized and decentralized Energy Market.

The coordination between different elements in the distributed Grid, needs solutions, most probably at IP level in order to reproduce an environment similar to Internet.

One of the strongest proposals of communications and coordination appoints to SIP protocol as a way to integrate the NGN Telco Functionalities with the needs of the Electric Grid.

A key element of many Smart Grid initiatives is support for Plug-in Electric Vehicles (PEVs). PEV batteries need to be charged from the grid, of course, but they can also contribute energy to the grid during peak usage times. Both of these operations require sophisticated metering to support the debiting and crediting of energy accounts associated with the using of and feeding to the grid. Further, as PEVs are automobiles, they will require support for mobile metering. For example, the owner of a PEV who needs to charge the battery when away from home will want to have the cost of that energy debited to their account, not to the account of the owner of the home they happen to be visiting. SIP's location register provides native support for device and user mobility. A SIP user can be found independent of the location and network connection. This functionality is critical to support of mobile metering where the PEV, for example, needs to connect to a back-office energy system different than the one used by the local fixed meter.

### Problems with existing solutions:

Problems with SCADA and other TC-57 applications are due that they are systems that were designed in 80s and continue being used because of reliability of many years in the market, and for that reason they are running in many Power Networks
SCADA protocols were designed with noisy serial communication environments in mind, and the use of cyclic redundancy codes (CRC), or similar technology, is present for error detection and correction.

The sender of the message will calculate the CRC and append it to the message. The receiving device will calculate the CRC for the message and compare it to the value received with the message. If a bit was flipped during transmission, the CRC indicates an error occurred during transmission.

Another common characteristic for SCADA protocols is the inability to provide authentication or validation services. This is the primary reason why SCADA systems assume a level of implicit trust. For example, when a message is received by an RTU, the source of the message is checked, and if that source is known, the request is enacted. No questions asked.

In addition to protocol vulnerabilities, the communication links are subject to man in the middle attacks. Electric distribution SCADA systems are geographically dispersed, and it is common for the connections to remote facilities or devices to be made over dial up, leased lines, or SCADA radios. While the specific attacks for these communication methods differ, each can be compromised.

Currently, power systems already accommodate a substantial penetration of DG (Distributed Generation) and operate in competitive environments. In the future, as a result of the liberalization and political regulations, power systems will have to deal with large-scale integration of DG and DER, as well as storage methods, and provide market agents with the means to ensure a flexible and secure operation. As mentioned above, this cannot be done with the traditional power systems operational tools used today which use very restricted information systems like SCADA. Some actions must be taken to adapt currently used systems to the foreseen integration of DG and DER devices. In the case of the present invention special attention is taken to a possible evolution of SCADA (Supervisory Control and Data Acquisition) systems.

A foreseen future problem is the incapacity to support of mobility and integration with Internet. Mobility is a key element in the future evolution of current hierarchical grid to distributed one. Especially for the scenario that considers many PEV that could plug in many different places of the grid and some mechanisms for monitor, control and billing is necessary.

### Description of the Invention

It is necessary to offer an alternative to the state of the art which covers the gaps found therein, overcoming the limitations expressed here above, and particularly allowing taking advantage from the use of the Session Initiation Protocol (SIP) mechanisms.

To that end, the present invention provides, in a first aspect, a method for managing communications in industrial supervision and control systems, comprising using the reference models followed by TC 57 group of the IEC for carrying out communications between a central computing host and a plurality of computing devices.

O contrary to known proposals, the method of the first aspect of the invention comprises, in a characteristic manner, providing a SIP mechanism inside a TC57 Architecture Model for carrying out said communications between said central computing host and said plurality of computing devices, through the establishment of SIP sessions and the subsequent dispatch of messages.

The use of SIP can supply some advantages to the conventional TC57 based proposals, such as location and presence services. And, of course, when the system to be supervised and controlled is an electric grid, the integration of the communication of the work force in the Electric Grid in the use of Multimedia over IP (IMS/TISPAN) scenarios. Also the possibility to develop new services ad- hoc for Energy Grid.

By the method of the invention, and particularly how it uses SIP, new possibilities to the evolution of SCADA, EMS, DMS, and other applications identified in the IEC TC-57 Model are open.

For an embodiment, the method comprises using said central computing host as a master unit and said computing devices as slave units, said communications comprising the establishment of SIP sessions and the sending of messages, for said master unit and said slave units, and the method comprising carrying out the next steps sequentially:
- a step, carried out by the master unit and the slave units in a synchronized manner, of sending to a REGISTRAR, through a REGISTER process:
- a notification indicating the IP address and URL for whom accept the calls, by said master unit; and
- a notification indicating the IP address and URL for whom accept the calls, by each slave unit;
and
- a step of transaction of Instant Messages that transport monitor and control information, in the form of encapsulated Application Protocol Data Units, or APDUs, between the master unit and the slave units.

For an embodiment, the method comprises providing a SIP layer in a TC57 Layer model for IEC 60870.

For a more specific embodiment the method comprises providing said SIP layer between a IEC 60870-5-101 or IEC 60870-5-105 application layer and a TCP transport layer of said TC57 Layer model for IEC 60870.

According to an embodiment of the method of the first aspect of the invention, it comprises providing an intermediate layer, or interlayer adaptation block, between said IEC 60870-5-101 or IEC 60870-5-105 application layer and said SIP layer, for carrying out tasks of interlayer adaptation with respect to said SIP layer and IEC application layers.

As stated above, according to the EPA model (Enhanced Performance Architecture (EPA) followed in 60870 protocols) some APCI (Application Protocol Control Information) is in general added to the ASDU to form the APDU (Application Protocol Data Unit). However the APCI is not needed in the IEC 60870-5-101 protocol, so the APDU is equal to the ASDU.

However, in this invention APCI is maintained in order to have the ability to admit functionalities now defined for legacy scenarios in direct digital links between Master Station and RTUs. The LPCI (Link Protocol Control Information), added to the APDU to form the LPDU (Link Protocol Data Unit), is obviated in this invention as this part of the frame corresponds to the link layer, and to define it was necessary when considering direct connection with asynchronous links, when protocol specified that, for transmission speeds up to 1200 bits/second, the Physical layer shall convert each transmitted bit directly into one of two frequencies, representing the binary one state and the binary zero state respectively

For a particular embodiment, said tasks to be carried out by said intermediate layer are:
- to read the APDUs from the IEC 60870-5 application layer;
- to determine the SIP URI address of the master unit if the message comes from the slave unit, or the SIP UDI address of the slave unit if the message comes from the master unit;
- to interpret the information in the APDUs;
- to pass the information to SIP layer in order to establish the basic REGISTER and Instant Message transaction; and
- to invoke autonomously NGN services from NGN, Next Generation Network, from slave unit or from master unit.

The method comprises, for a specific embodiment, splitting said intermediate layer into the next four sub blocks for carrying out the next indicated functions:
- a first sub block, or APDU interface, that interfaces with the 60870-5 layer in order to read the APDU data stream and selects the different APDU fields to extract address information and command information;
- a second sub block that processes data received from said first block and transfers it to a SIP interface layer of a fourth sub block;
- a third sub block, or NGN Service layer, that processes and interprets the information received from said first block to generate new NGN services, such as alarms, location services and multimedia services, and to send them to said fourth sub block; and
- a fourth sub block, or interface SIP layer, that:
- in a first direction receives the information sent by said second and third sub blocks, and sends it to said SIP layer, after translating and adapting it to the SIP layer protocols, and
- in a second direction receives the information from said SIP layer and sends it to said second and third sub blocks, that will pass it to said first block.

For an embodiment, said central computing host is a Supervisory Control and Data Acquisition, SCADA, central host and said computing devices are remote terminal units and/or programmable logic controllers

Although the method can be applied to different kind of systems, for an embodiment it is applied to the managing of communications of industrial supervision and control systems related with elements in an electrical Grid, to supervise and control fixed and/or mobile elements of said electrical Grid, such as elements of the next groups: Distributed Energy Resources, DER, and Power assisted Human Electrical Vehicles, PHEV.

A second aspect of the invention relates to a system for managing communications in industrial supervision and control systems, comprising an architecture according to the reference models followed by TC 57 group of the IEC, including a network and, connected thereto, a central computing host and a plurality of computing devices.

In the system of the second aspect of the invention, said network, said central computing host and said plurality of computing devices are all arranged and intended for establishing communication there between according to the method of the first aspect of the invention.

By the method and system of the invention, particularly by the introduction of a novel block in the TC 57 Reference model, the functionalities of control and supervision Systems used in the industry as SCADA are adapted to be integrated with the possibilities offered by the NGN TISPAN architectures followed by the Telcos. Establishing in that way a new method for supervision and control applied on Industrial scenarios where TC-57 model is followed. This will be a first Step in the integration of Supervision and control systems in the future evolution of the power grid. As stated above, more specifically the invention works with the introduction of SIP protocol in the IEC 60870-104 protocol. This protocol works over IP and in this invention it is proposed the introduction of SIP protocol to let the SCADA systems the use of Telco NGN functionalities and services according to TISPAN IMS.

The present invention introduces a novel mechanism for the coordination between Master (SCADA, EMS, etc.) and Slaves (Remote Units, RTU, etc.) in any industrial Supervision and Control scenario for Energy, Water, Gas etc infrastructures but specially for synchronization of elements in future Smart Grids.

These new mechanism is based on introduction of SIP inside the communication process between Master SCADA and Slaves RTU. The use of SIP opens the possibility that RTU initiate the communication at the moment there is any event that requires the attention of Master SCADA. As stated above, this mechanism will be valid, specially, for any element introduced in the future Distributed Energy Grid Network

### Brief Description of the Drawings

The previous and other advantages and features will be more fully understood from the following detailed description of embodiments, with reference to the attached drawings (some of which have already been described in the Prior State of the Art section), which must be considered in an illustrative and non-limiting manner, in which:
Figure 1 shows a simplified SCADA diagram and elements included therein;
Figure 2 shows a simplified TC57 Model for SCADA;
Figure 3 shows a full TC57 Reference Architecture;
Figure 4 shows a TC57 Standard Structure for power systems;
Figure 5 illustrates schematically a general description of the APDU;
Figure 6 shows schematically a general description of the APCI;
Figure 7 is a schematic illustrated detailed description of the APDU;
Figure 8 Differences between OSI 7 layer and EPA 3 layer Model;
Figure 9 depicts a SIP layer Model;
Figure 10 shows a simplified architecture of introduction of SIP in communication Architecture for IEC 60870 Protocol, according to the method of the first aspect of the invention;
Figure 11 shows a specific step of the method of the invention, particularly referred to an overview of SIP Register, for an embodiment;
Figure 12 shows another specific step of an embodiment of the method of the invention, specifically related to a Register Transaction process;
Figure 13 shows another step of an embodiment of the method of the invention, particularly referred to a SIP Master SCADA-RTU Instant message transaction;
Figure 14 shows a TC 57 model once a SIP layer and an Interlayer adaptation layer have been introduced therein according to an embodiment of the method of the first aspect of the invention;
Figure 15a to 15c are respective illustrative descriptions of first, second, third and fourth sub blocks into which the Interlayer adaptation layer is splitted according to an embodiment of the method of the invention;
Figures 16 shows an implementation of the Interlayer adaptation in MASTER STATION side, for an embodiment of the method of the invention; and
Figure 17 shows an implementation of the Interlayer adaptation in RTU side, also for an embodiment of the method of the invention.

### Detailed Description of Several Embodiments

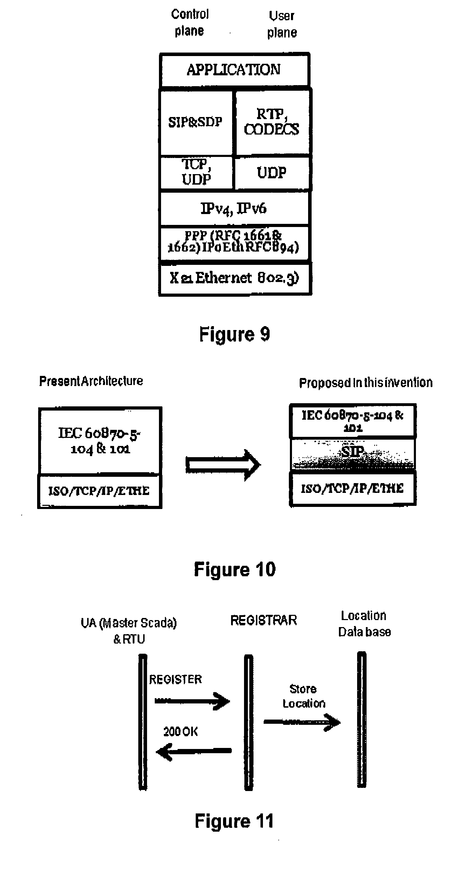

IEC 60870-104 encapsulates the ASDU (Application Service Data Unit) over TCP transport Layer. According to the method of the first aspect of the invention, a SIP layer is introduced between IEC 60870-5-104, or IEC 60870-5-101, in the application layer and the TCP transport Layer, as is shown in Figure 10 for a simple embodiment. In this way the SCADA functions will benefit from NGN network functionalities.

IEC 870-5 protocols are based on a three-layer Enhanced Performance Architecture (EPA) reference model for efficient implementation within RTUs, meters, relays, and other IEDs. Additionally, EPA defines basic application functionality for a user layer, which is situated between the OSI Application Layer and the application program. This user layer adds interoperability for such functions as clock synchronization and file transfers. In Figure 8 the layer model for respectfully OSI, EPA and TC 57 are shown.

According to the method of the invention, a SIP layer is adapted for communication in IEC 60870-5 protocol, as shown in Figure 10, by taking into account Figure 8 and Figure 9, the latter showing a layer picture SIP over TCP.

In this invention only the SIP control plane, no RTP transport, will be considered.

### The diagram of communication between Master SCADA and Slave RTU

After implementation of SIP in IEC 60870-5-101 & IEC 60870-5-104 a simplified description of how the connection between Master SCADA Unit and Slave RTU until is established, is explained in Figures 11 to 13.

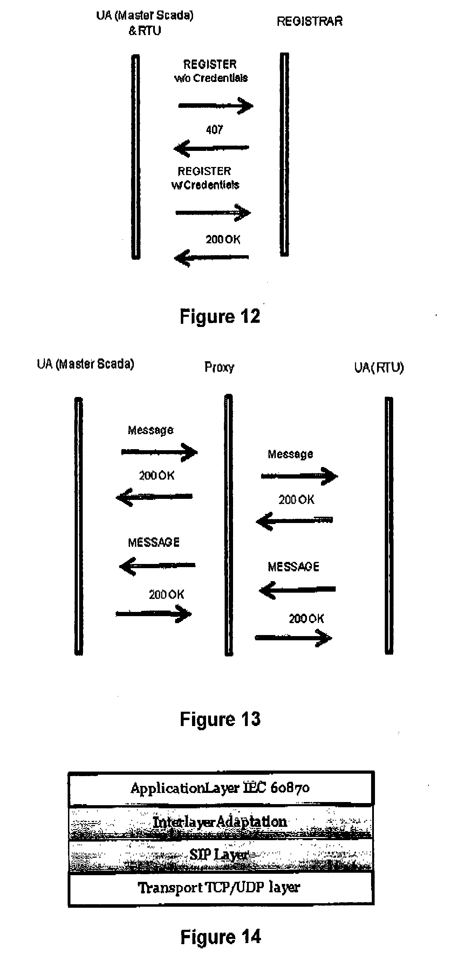

In a first step, the different elements must REGISTER and, after that, interchange control and analysis information through Instant Message RFC 3428 protocol Methods in SIP. Summarizing that process can be described by means of the following steps:
- First Step, carried out by the Master Unit and the Slave Snit (RTU) in a synchronized manner, of registering in a REGISTRAR element. See Figure 11 and 12:
   The first User Agent (UA) (in this case Master Station SCADA) notifies the IP address and URL from who it accepts the calls. The second UA (in this case Slave Station RTU) notify the IP address and URL ("contact") from who it accepts the calls. The "expires" will indicate how many time the register is valid.

After said REGISTER sequence the transaction of Instant Message that transport the monitor and control information between SCADA and RTUs starts, as shown in Figure 13. As APDU has a maximum size of 253 bytes and Instant message 1300 bytes, there is no need for splitting APDU in order to encapsulate it into Instant Messages SIP frame.

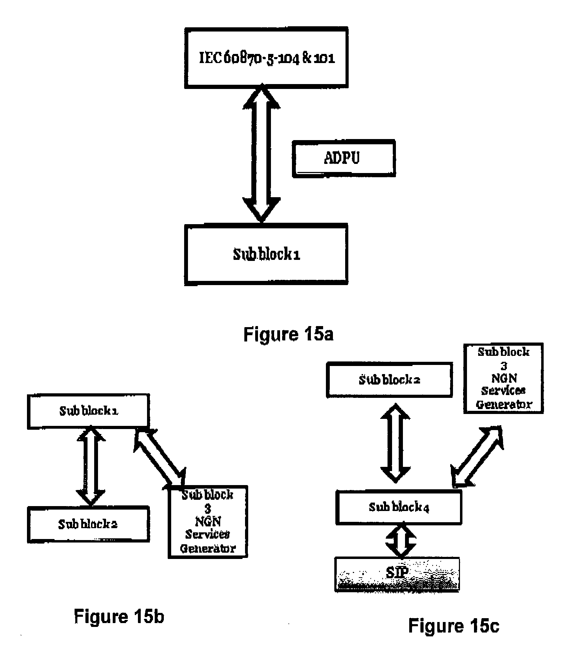

Next a description of a more elaborated embodiment of the invention is done with reference to Figures 14 and 15a to 15c.

As stated above, the basis of the present invention consists on the specification of a new element inside the IEC TC 57 Architecture Model in such a way that a new method for communication in SCADA system will be established. This new element will let the communication between Master and Slave system in SCADA communication with RTU, through the establishment of SIP session and MESSAGE method.

Although for the simple embodiment described above, a SIP layer is introduced directly between IEC 60870-5 application layer and the TCP transport Layer (see Figure 10), for the more elaborated embodiment shown by Figure 14 an intermediate layer is arranged between said SIP layer and the IEC application layer.

Said intermediate layer is an interlayer adaptation layer which carries out the following functions:
- Read the APDU from IEC 60870 Layer.
- Determine the SIP URI or UDI Address of the other User Agent, Master Unit or RTU.
- Interpret the information in APDU.
- Pass the information to SIP layer in order to establish the basic REGISTER and Instant Message transaction.
- Invoke autonomously NGN services from NGN network from RTU or from Master Unit.

This Interlayer Adaptation Element will Read APDU frame from IEC 60870 layer and will translate this information to the SIP layer.

### Detailed description of interlayer adaptation:

The Interlayer adaptation block is composed of four sub blocks, illustrated in Figures 15a, 15b and 15c:
1. A first sub block (Sub block 1), APDU interface, that interfaces with 60870-5 layer in order to read the APDU data stream and selects the different APDU fields to extract address information and command information.
2. A second sub block (Sub block 2), that processes the data received and will generate the information to SIP interface layer.
3. A third sub block (Sub block 3), NGN Service layer that will interpret the information from APDU Interface layer to generate new possible NGN services
4. A fourth sub block (Sub block 4), Interface SIP layer, that receives the before mentioned information to generate the information needed in SIP layer.

### Sub block 1, APDU Interface:

This sub block is implemented through the adequate routines that will read the APDU data stream from APDU structure in order to translate to the correct SIP command in the Sub blocks 2 and 3.

Looking at ASDU structure, the RTU address field is that which follows the transmission cause field. And the information object corresponds to the address of the devices that generated the information that is needed to query The Sub block1 must take this address and transform in a SIP URI, that corresponds to RTU address if the Instant Message generator is the Master Unit (SCADA) and SIP UDI that correspond to Master Unit if the Instant Message departs from RTU. In back ward direction will transform the SIP URI in the correct address for the APDU

### Sub blocks 2 and 3, Translators from TC57 60870 Services SIP interface block and to NGN services Generator:

In this invention, Sub block 2 only pass APDU information to Sub block 4 and SIP layer, in order to communicate Master and Slave station, over NGN network.

Sub block 2 takes the information generated in the Sub block 1, and the URIs generated, and passes APDU and the URIs to the Sub block 4 in order to let the SIP module to initiate the NGN communication between Master Unit and RTU, or Vice versa if it receives information from SIP layer, therefore passing it to Sub block 1.

Sub block 3 carries out the functions of reading the APDU and interpreting the commands, and of generating new NGN services through the NGN network, for example alarms, location services, multimedia services, etc.

### Sub-block 4 Interface to SIP:

This sub block takes the previous information and passes it to SIP layer, that generates the messages to the NGN network

This sub block translates and adapts the information to the protocols in which are based SIP, HTTP. And, vice versa, takes the information received from the SIP layer and passes it to Sub blocks 2 and 3.

### Changes in the ASDU Frame format to adapt to extract new functionalities from NGN network.

For the introduction of SIP in TC 57, specifically the method of the present invention considers the transparency to APDU frame in the transport by Instant Messaging.

For an embodiment, a reservation of bits in the Type ID field is done in such a way that the codes (not specified in the standard) in the IEC 60870, 128- 255, are used for invocation of new services in the NGN network.

### Use Case Implementation

The implementation of the method of the invention by use cases depends on the different implementations of manufacturers.
Next a specific Use Case implementation is described referring only to the basic functionality of the communication between Master Station SCADA and RTU, but not to the generation of new NGN services carried out by Sub block 3.
A diagram top level representation of said Use Case implementation is as follows:
1. REGISTER_ROUTINE< field1 OPTIONS><field2 ADDRESS>
   This routine will generate the services allowed and the address allowed to the communication through the SIP. They will contact with REGISTAR element of the IMS/TISPAN NETWORK.
2. READ_ROUTINE<field1 APDU ><field2 Byte 9,Byte 10, Byte 11, ORIGINATOR>
   This routine reads the APDU from 60870-5-101 & 104 block and extracts the RTU address from the bytes 9-11. This information will be necessary to generate the URI needed in the SIP Instant Message process.
3. COPY_ROUTINE<field1 APDU >
   This routine will copy APDU to SIP routine in order to transport it in the Instant Message to the RTU.
4. TRANSLATE_URI_ROUTINE<field1 APDU _RTU_ADDRESS>< field2 ADDRESS MASTER STATION>
   This routine will translate the 60870-101 & 104 address in the APDU, bytes 9-11, in order to generate URI address, to be used in the SIP protocol. Also adds the URI that corresponds to the Master station in order to let the RTU send back the Instant Message to the Master Station.
   In RTU also generates the address URI that corresponds to RTU in order to Register in REGISTAR element in NGN/IMS network.
   Also in RTU side this routine receives the ADDRESS_MASTER_STATION from SIP_ROUTINE_READ in order to let the RTU to communicate over SIP to the right MASTER STATION.
5. SIP_ROUTINE_WRITE<field1 RTU ADDRESS><field2 METHOD=Instant Message> <field3 APDU ><field4 ADDRESS MASTER STATION>
   This routine will write the URI RTU address generate in the Instant Message Method, and will include the APDU frame to be transported to the RTU.
6. SIP_ROUTINE_READ<field1 INSTANT_MESSAGE_DATA>
   This routine will read the Instant Message received in the Master Station.
7. TRANSFER_ROUTINE<field1 APDU >
   This routine will read the APDU from the SIP_ROUTINE_READ and pass to 60870-101 & 104 block.

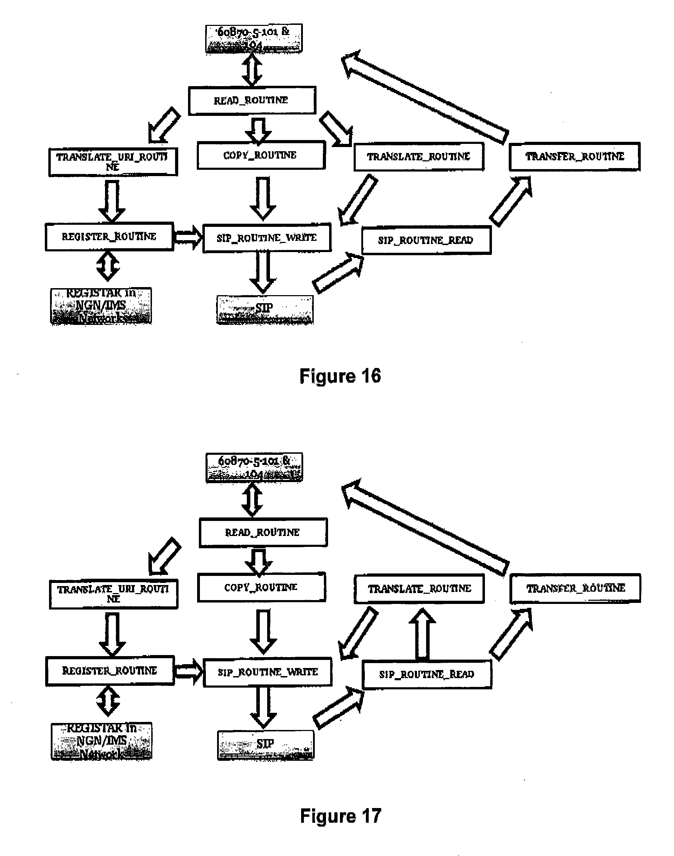

Figures 17 and 18 show respective implementations of the Interlayer adaptation in, respectively, MASTER STATION and RTU side, for an embodiment of the method of the invention using the routines of the just above described use case.

### Advantages of the Invention

The present invention supplies a method for a first integration of the industrial Supervision and Control systems with NGN Telco Network and taking advantages of an integrated Multimedia Communication architecture over IP and with three possibilities to be open to internet.

Current systems are not enough flexible and most of the concepts and functionalities thereof remain in the requirements of when they were created in 80's. But in such a situation, the present invention supplies a method which can be applied to an evolved foreseen future Grid where DER (Distributed Energy Elements) and DG (Distributed Generation) concepts are important.

The most important consequence of this integration is the introduction of NGN functionalities as mobility, location and Presence, that could be useful for Energy companies to step forward in the evolution of the Grid till Smart Grid that would need to cope with DER(Distributed Energy Resources), DG (Distributed Generation) and PEV.

For the Telco some future market is foreseen, where is important not only smart metering applications, but also all the needs for synchronization, authentication and mobility in a critical Electric Network with even many more devices than the ones included in the current Internet solutions, that will need reliable monitor and control (e.g.: DER, PEV, Substations, Meters) and the integration in an Internet liberalized market place.

In the present situation the Energy network and the supervision systems are not ready for PEV massive deployment. In this case SIP and NGN mobility functionality are necessary and this invention provides the mechanisms to implement it.

By the other side, the present invention propose the use of some of the NGN/IMS/TISPAN services to improve the synchronization and integration of the Energy process looking at the top level architecture proposed in NIST for Smart Grid.

A person skilled in the art could introduce changes and modifications in the embodiments described without departing from the scope of the invention as it is defined in the attached claims.

### Acronyms and Abbreviations:

ASDU (Application Service Data Unit)
APCI (Application Protocol Control Information)
APDU (Application Protocol Data Unit)
CIM (Common Information Model)
DG (Distributed Generation)
DER (Distributed Energy Elements)
DMS (Distribution Management System)
GID (Generic Interface Definition)
IEC (International Communications Protocol)
NIST (National Institute of Standards and Technology)
RTU (Remote Terminal Units)
PHEV (Power assisted Human Electrical Vehicles)

### REFERENCES

[1] Report to NIST on the Smart Grid Interoperability Standards Roadmap. EPRI. August 10, 2009.
[2] Harmonization of CIM with IEC Standards- EPRI- Technical Report
[3] IEC 60870-5-101 Transmission Protocols, companion standards especially for basic telecontrol tasks- 2006
[4] IEC 60870-5-104 Transmission Protocols, Network access for IEC 60870-5-101 using standard transport profile- 2006
[5] Desarrollo de una interfaz hacia el protocolo IEC 870-5 para una unidad terminal remota de un sistema SCADA- Óscar Mauricio Vargas Fallas - Proyecto de Graduación 2002
[6] Supervisory Control and Data Acquisition (SCADA) Systems - OFFICE OF THE MANAGER NATIONAL COMMUNICATIONS SYSTEM 2004
[7] Position Paper SIP - Open Communications for Smart Grid Devices - Joe DiAdamo June 2009

## Claims

1. A method for managing communications in industrial supervision and control systems, comprising using the reference Architecture models followed by TC 57 group of the IEC for carrying out communications between a central computing host and a plurality of computing devices and a SIP mechanism for carrying out said communications between said central computing host and said plurality of computing devices, through the establishment of SIP sessions and the subsequent dispatch of messages where the method is **characterised in that** it comprises providing said SIP mechanism inside a TC 57 Architecture Model, as a SIP layer in a TC 57 Layer model for IEC 60870.

2. A method as per claim 1, comprising using said central computing host as a master unit and said computing devices as slave units, and wherein said communications comprising the establishment of SIP sessions and the sending of messages, for said master unit and said slave units, comprises carrying out the next steps sequentially:
- a step, carried out by the master unit and the slave units in a synchronized manner, of sending to a REGISTRAR, through a REGISTER process:
- a notification indicating the IP address and URL for whom accept the calls, by said master unit; and
- a notification indicating the IP address and URL for whom accept the calls, by each slave unit;
and
- a step of transaction of Instant Messages that transport monitor and control information, in the form of encapsulated Application Protocol Data Units, or APDUs, between the master unit and the slave units.

3. A method as per claim 1, comprising providing said SIP layer between a IEC 60870-5-101 or IEC 60870-5-105 application layer and a TCP transport layer of said TC57 Layer model for IEC 60870.

4. A method as per claim 3, comprising providing an intermediate layer, or interlayer adaptation block, between said IEC 60870-5-101 or IEC 60870-5-105 application layer and said SIP layer, for carrying out tasks of interlayer adaptation with respect to said SIP layer and IEC application layers.

5. A method as per claim 4, wherein said tasks to be carried out by said intermediate layer are:
- to read the APDUs from the IEC 60870-5 application layer;
- to determine the SIP URI address of the master unit if the message comes from the slave unit, or the SIP UDI address of the slave unit if the message comes from the master unit;
- to interpret the information in the APDUs;
- to pass the information to SIP layer in order to establish the basic REGISTER and Instant Message transaction; and
- to invoke autonomously NGN services from NGN, Next Generation Network, from slave unit or from master unit.

6. A method as per claim 5, comprising splitting said intermediate layer into the next four sub blocks for carrying out the next indicated functions:
- a first sub block, or APDU interface, that interfaces with the 60870-5 layer in order to read the APDU data stream and selects the different APDU fields to extract address information and command information;
- a second sub block that processes data received from said first block and transfers it to a SIP interface layer of a fourth sub block;
- a third sub block, or NGN Service layer, that processes and interprets the information received from said first block to generate new NGN services and to send them to said fourth sub block; and
- a fourth sub block, or interface SIP layer, that:
- in a first direction receives the information sent by said second and third sub blocks, and sends it to said SIP layer, after translating and adapting it to the SIP layer protocols, and
- in a second direction receives the information from said SIP layer and sends it to said second and third sub blocks, that will pass it to said first block.

7. A method as per claim 6, wherein said new NGN services generated by said third sub block are at least one of: alarms, location services and multimedia services.

8. A method as per any of the previous claims, wherein said central computing host is a Supervisory Control and Data Acquisition, SCADA, central host and said computing devices are remote terminal units and/or programmable logic controllers

9. A method as per claim 8, wherein it is applied to the managing of communications of industrial supervision and control systems related with elements in an electrical Grid.

10. A method as per claim 9, wherein it is applied to supervising and controlling fixed and mobile elements of said electrical Grid.

11. A method as per claim 10, wherein it is applied to supervising and controlling elements of at least one of the next groups: Distributed Energy Resources, DER, and Power assisted Human Electrical Vehicles, PHEV.

12. A system for managing communications in industrial supervision and control systems, comprising an architecture according to the reference models followed by TC 57 group of the IEC, including a network and, connected thereto, a central computing host and a plurality of computing devices and a SIP mechanism for carrying out said communications between said central computing host and said plurality of computing devices, through the establishment of SIP sessions and the subsequent dispatch of messages where the system is **characterised in that** said SIP mechanism is placed inside a TC 57 Architecture Model as a SIP layer in a TC 57 Layer model for IEC 60870 and said network, said central computing host and said plurality of computing devices are all arranged and intended for establishing communication there between according to the method as per any of the previous claims..

## Patentansprüche

1. Verfahren zum Verwalten von Verbindungen in industriellen Überwachungs- und Steuersystemen, umfassend das Verwenden der Referenz-Architekturmodelle der Gruppe TC 57 der IEC zum Ausführen von Verbindungen zwischen einem Zentralrechner-Host und einer Vielzahl von Rechenvorrichtungen und eines SIP-Mechanismus zum Ausführen besagter Verbindungen zwischen besagtem Zentralrechner-Host und besagter Vielzahl von Rechenvorrichtungen durch das Einrichten von SIP-Sitzungen und dem darauf folgenden Versenden von Nachrichten, **dadurch gekennzeichnet, dass** es das Bereitstellen von dem besagten SIP-Mechanismus innerhalb eines TC 57-Architekturmodells als eine SIP-Schicht in einem TC 57-Schichtenmodell für IEC 60870 umfasst.

2. Verfahren nach Anspruch 1, umfassend das Verwenden des besagten Zentralrechner-Hosts als eine Master-Einheit und der besagten Rechenvorrichtungen als Slave-Einheiten, und wobei die besagten Verbindungen, welche das Einrichten von SIP-Sitzungen und das Versenden von Nachrichten für die besagte Master-Einheit und die besagten Slave-Einheiten umfassen, das sequentielle Ausführen der folgenden Schritte umfassen:
- einen Schritt, welcher durch die Master-Einheit und die Slave-Einheiten synchronisiert durchgeführt wird, des Sendens an eine REGISTRIERSTELLE durch einen REGISTRIER-Vorgang:
- einer Benachrichtigung durch die Master-Einheit, welche die IP-Adresse und die URL desjenigen, der die Anrufe annimmt, angibt; und
- einer Benachrichtigung durch jede Slave-Einheit, welche die IP-Adresse und die URL desjenigen, der die Anrufe annimmt, angibt;
und
- einen Transaktionsschritt von Sofortnachrichten, welche Überwachungs-und Steuerinformationen transportieren, in Form von eingekapselten Anwendungsprotokolldateneinheiten oder APDU's *(Application Protocol Data Units)* zwischen der Master-Einheit und den Slave-Einheiten.

3. Verfahren nach Anspruch 1, umfassend das Bereitstellen der besagten SIP-Schicht zwischen einer IEC 60870-5-101- oder IEC 60870-5-105-Anwendungsschicht und einer TCP-Transportschicht des besagten TC57-Schichtenmodells für IEC 60870.

4. Verfahren nach Anspruch 3, umfassend das Bereitstellen einer Zwischenschicht oder eines Zwischenschicht-Adaptionsblocks zwischen der besagten IEC 60870-5-101- oder IEC 60870-5-105-Anwendungsschicht und der besagten SIP-Schicht zum Ausführen von Funktionen bezüglich der Zwischenschichtanpassung bezüglich der besagten SIP-Schicht und IEC-Anwendungsschichten.

5. Verfahren nach Anspruch 4, wobei die besagten durch die besagte Zwischenschicht auszuführenden Funktionen aus Folgendem bestehen:
- Auslesen der APDU's aus der IEC 60870-5-Anwendungsschicht;
- Bestimmen der SIP-URL-Adresse der Master-Einheit, wenn die Nachricht von der Slave-Einheit stammt, oder der SIP-UDI-Adresse der Slave-Einheit, wenn die Nachricht von der Master-Einheit stammt;
- Interpretieren der Informationen in den APDU's;
- Weiterleiten der Information an die SIP-Schicht, um das grundlegende REGISTRIEREN und die Sofortnachrichten-Transaktion einzurichten; und
- autonomes Aufrufen von NGN-Dienstleistungen eines NGN, *Next Generation Network,* von der Slave-Einheit oder von der Master-Einheit.

6. Verfahren nach Anspruch 5, umfassend das Aufsplitten der besagten Zwischenschicht in die folgenden vier Unterblöcke zum Ausführen der folgenden aufgeführten Funktionen:
- einen ersten Unterblock bzw. APDU-Schnittstelle, welcher mit der 60870-5-Schicht verbunden ist, um den APDU-Datenstrom auszulesen und die unterschiedlichen APDU-Felder auswählt, um Adressinformationen und Befehlsinformationen zu extrahieren;
- einen zweiten Unterblock, welcher von dem besagten ersten Block empfangene Daten verarbeitet und diese zu einer SIP-Zwischenschicht eines vierten Unterblocks überträgt;
- einen dritten Unterblock bzw. NGN-Dienstleistungsschicht, welcher die von dem besagten ersten Block empfangenen Informationen verarbeitet und interpretiert, um neue NGN-Dienstleistungen zu erzeugen und diese zum besagten vierten Unterblock zu senden; und
- einen vierten Unterblock bzw. Schnittstellen-SIP-Schicht, welcher:
- in einer ersten Richtung die durch den besagten zweiten und dritten Unterblock gesendeten Informationen empfängt und diese an die besagte SIP-Schicht sendet, nachdem er diese übersetzt und an die SIP-Schicht-Protokolle angepasst hat, und
- in einer zweiten Richtung die Informationen von der besagten SIP-Schicht empfängt und diese zum besagten zweiten und dritten Unterblock sendet, welche diese zum besagten ersten Block weiterleiten werden.

7. Verfahren nach Anspruch 6, wobei die besagten neuen NGN-Dienstleistungen, welche durch den besagten dritten Unterblock erzeugt werden, zumindest aus einem Teil der folgenden Gruppe bestehen: Alarme, Lokalisierungsdienstleistungen und Multimedia-Dienstleistungen.

8. Verfahren nach einem der vorherigen Ansprüche, wobei der besagte Zentralrechner-Host ein zentraler Host zur Überwachung, Steuerung und Datenerfassung (*Supervisory Control and Data Acquisition,* SCADA) ist und die besagten Rechenvorrichtungen Fernbedienungsterminale und/oder speicherprogrammierbare Steuerungen sind.

9. Verfahren nach Anspruch 8, wobei es beim Verwalten von Verbindungen von industriellen Überwachungs- und Steuersystemen angewendet wird, welche sich auf Elemente in einem elektrischen Netz beziehen.

10. Verfahren nach Anspruch 9, wobei es beim Überwachen und Steuern von fixen und mobilen Elementen des besagten elektrischen Netzes angewendet wird.

11. Verfahren nach Anspruch 10, wobei es beim Überwachen und Steuern von Elementen von zumindest einer der folgenden Gruppen angewendet wird: Dezentrale Energieressourcen *(Distributed Energy Resources,* DER) und PHEV-Fahrzeuge *(Power assisted Human Electrical Vehicles).*

12. System zum Verwalten von Verbindungen in industriellen Überwachungs- und Steuersystemen, umfassend eine Architektur nach den Referenzmodellen der Gruppe TC 57 der IEC, einschließlich eines Netzwerks und, daran angeschlossen, eines Zentralrechner-Hosts und einer Vielzahl von Rechenvorrichtungen und eines SIP-Mechanismus zum Ausführen der besagten Verbindungen zwischen dem besagten Zentralrechner-Host und besagter Vielzahl von Rechenvorrichtungen durch das Einrichten von SIP-Sitzungen und dem darauf folgenden Versenden von Nachrichten, dadurch **gekennzeichnet, dass** der besagte SIP-Mechanismus innerhalb eines TC 57-Architekturmodells als eine SIP-Schicht in einem TC 57-Schichtenmodell für IEC 60870 platziert ist und das besagte Netzwerk, der besagte Zentralrechner-Host und die besagte Vielzahl von Rechenvorrichtungen allesamt angeordnet und vorgesehen sind, um zwischen sich eine Verbindung gemäß dem Verfahren nach einem der vorherigen Ansprüche aufzubauen.

## Revendications

1. Procédé pour la gestion de communications dans des systèmes de supervision et de contrôle industriels, comprenant l'utilisation des modèles d'architecture de référence suivis par le groupe TC 57 de l'IEC pour réaliser des communications entre un hôte informatique central et une pluralité de dispositifs informatiques et un mécanisme SIP pour réaliser lesdites communications entre ledit hôte informatique central et ladite pluralité de dispositifs informatiques, à travers l'établissement de sessions SIP et l'envoi ultérieur de messages dans lesquels le procédé est **caractérisé en ce qu'**il comprend la provision dudit mécanisme SIP au sein d'un modèle d'architecture TC 57, comme une couche SIP dans un modèle de couche TC 57 pour l'IEC 60870.

2. Procédé selon la revendication 1, comprenant l'utilisation dudit hôte informatique central comme une unité maîtresse et lesdits dispositifs informatiques comme des unités esclaves, et dans lequel lesdites communications comprenant l'établissement de sessions SIP et l'envoi de messages, pour ladite unité maîtresse et lesdites unités esclaves, comprennent la réalisation des étapes suivantes successivement :
- une étape, réalisée par l'unité maîtresse et les unités esclaves de manière synchronisée, d'envoi à un REGISTRAIRE, par le biais d'un processus de REGISTRE :
- une notification indiquant l'adresse IP et l'URL pour quiconque accepte les appels, par ladite unité maîtresse ; et
- une notification indiquant l'adresse IP et l'URL pour quiconque accepte les appels, par chaque unité esclave ;
et
- une étape de transaction de messages instantanés qui transporte des informations de surveillance et contrôle, sous la forme d'Unités de données du protocole d'application encapsulées, ou APDUs, entre l'unité maîtresse et les unités esclaves.

3. Procédé selon la revendication 1, comprenant la prévision de ladite couche SIP entre une couche d'application IEC 60870-5-101 ou IEC 60870-5-105 et une couche de transport TCP dudit modèle de couche TC57 pour l'IEC 60870.

4. Procédé selon la revendication 3, comprenant la prévision d'une couche intermédiaire, ou d'un bloc d'adaptation inter-couche, entre ladite couche d'application IEC 60870-5-101 ou IEC 60870-5-105 et ladite couche SIP, pour réaliser des tâches d'adaptation inter-couche par rapport à ladite couche SIP et aux couches d'application IEC.

5. Procédé selon la revendication 4, dans lequel lesdites tâches à être réalisées par ladite couche intermédiaire sont :
- lire les APDUs de la couche d'application IEC 60870-5 ;
- déterminer l'adresse SIP URI de l'unité maîtresse si le message provient de l'unité esclave, ou de l'adresse SIP UDI de l'unité esclave si le message provient de l'unité maîtresse ;
- pour interpréter les informations des APDUs ;
- pour transmettre les informations à une couche SIP afin d'établir le REGISTRE basique et la transaction du message instantané ; et
- pour invoquer de manière autonome des services NGN depuis le NGN, le réseau de la nouvelle génération, depuis l'unité esclave ou depuis l'unité maîtresse.

6. Procédé selon la revendication 5, comprenant la division de ladite couche intermédiaire en les quatre sous-blocs suivants pour réaliser les fonctions indiquées ci-après :
- un premier sous-bloc, ou interface APDU, qui est connecté à la couche 60870-5 afin de lire les flux de données APDU et sélectionner les différents champs APDU pour extraire les informations d'adresse et les informations de commande ;
- un deuxième sous-bloc qui traite les données reçues à partir du premier bloc et les transfère à une couche d'interface SIP d'un quatrième sous-bloc ;
- un troisième sous-bloc, ou couche de service NGN, qui traite et interprète les informations reçues dudit premier bloc pour générer de nouveaux services NGN et les envoyer au quatrième sous-bloc ; et
- un quatrième sous-bloc, ou couche SIP d'interface, qui :
- dans une première direction reçoit les informations envoyées par lesdits deuxième et troisième sous-blocs, et les envoie à ladite couche SIP, après les avoir traduites et adaptées aux protocoles de couche SIP, et
- dans une deuxième direction reçoit les informations de ladite couche SIP et les envoie auxdits deuxième et troisième sous-blocs, qui les transmettront audit premier bloc.

7. Procédé selon la revendication 6, dans lequel lesdits nouveaux services NGN générés par ledit troisième sous-bloc sont au moins un parmi : les alarmes, les services de localisation et les services multimédias.

8. Procédé selon l'une quelconque des revendications précédentes, dans lequel ledit hôte informatique central est un système superviseur de contrôle et d'acquisition de données, SCADA, l'hôte central et lesdits dispositifs informatiques sont des unités terminales à distance et/ou des contrôleurs logiques programmables.

9. Procédé selon la revendication 8, dans lequel il est appliqué à la gestion des communications des systèmes de supervision et de contrôle industriels liés aux éléments dans un réseau électrique.

10. Procédé selon la revendication 9, dans lequel il est appliqué pour superviser et contrôler des éléments fixes et mobiles dudit réseau électrique.

11. Procédé selon la revendication 10, dans lequel il est appliqué pour superviser et contrôler des éléments de l'un au moins des groupes suivants : des ressources énergétiques distribuées, DER, et des véhicules hybrides à propulsion humaine, PHEV.

12. Système de gestion de communications dans les systèmes de supervision et de contrôle industriels, comprenant une architecture selon les modèles de référence suivis par le groupe TC 57 de l'IEC, y compris un réseau et, connecté à celui-ci, un hôte informatique central et une pluralité de dispositifs informatiques et un mécanisme SIP pour réaliser lesdites communications entre ledit hôte informatique central et ladite pluralité de dispositifs informatiques, à travers l'établissement de sessions SIP et l'envoi ultérieur des messages dans lesquels le système est **caractérisé en ce que** ledit mécanisme SIP est placé au sein d'un modèle d'architecture TC 57 comme une couche SIP dans un modèle de couche TC 57 pour l'IEC 60870 et ledit réseau, ledit hôte informatique central et ladite pluralité de dispositifs informatiques sont tous disposés et destinés à établir une communication entre eux selon le procédé selon l'une quelconque des revendications précédentes.
